# EUROPÄISCHE PATENTSCHRIFT

(11) **EP 3 283 256 B1**
(45) Veröffentlichungstag und Bekanntmachung des Hinweises auf die Patenterteilung: **05.06.2019**
(21) Anmeldenummer: 16725349.1
(22) Anmeldetag: 10.04.2016
(51) Int. Cl.: B23Q 3/08, B23Q 1/03, B25B 11/00

(54) **SENSORISCH ÜBERWACHTER BLOCKSAUGER**
SENSOR-MONITORED VACUUM CHUCK
ÉLÉMENT D'ASPIRATION SURVEILLÉ PAR DÉTECTEURS

(30) Priorität: 12.04.2015 DE 102015004417; 12.11.2015 DE 102015014585
(43) Veröffentlichungstag der Anmeldung: 21.02.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000149
(87) Internationale Veröffentlichungsnummer: WO 2016/165682

(56) Entgegenhaltungen:
- EP-A1- 2 992 993
- WO-A1-2012/101608
- DE-A1-102008 051 116
- DE-U1- 20 308 354
- US-A- 5 758 869

## Beschreibung

Die Erfindung betrifft einen Werkstückspanntisch einer Holzbearbeitungsmaschine mit auf Spannbrücken angeordneten Blocksaugern zum kraftschlüssigen Spannen von Werkstücken mittels Unterdruck, wobei der einzelne Blocksauger zum Einrichten des Werkstückspanntisches manuell auf eine Spannbrücke - an einer durch mindestens eine leuchtende Sendelichtquelle eines Lichtbandes optisch markierten Position - aufsetzbar ist (siehe z.B. DE 203 08 354 U1). Ein einzelner Blocksauger ist Teil einer Spanneinrichtung, mit dessen Hilfe vorübergehend ein in der Regel flächiges, formsteifes Werkstück in einer definierten Orientierung und Position durch Kraftschluss gehalten wird. Das Werkstück, z.B. eine zu bearbeitende Holzplatte, liegt meist auf mehreren Blocksaugern auf. Der einzelne Blocksauger, vgl. z.B. DE 202 06 489 U1, sitzt alleine oder zusammen mit anderen Blocksaugern auf einer Spannbrücke an einer beliebigen, aber bestimmbaren Position. Die Spannbrücke wiederum ist, zusammen mit anderen Spannbrücken, auf einem Maschinenbett montagebedingt verschiebbar befestigt. Die Verschieberichtung der Spannbrücken ist quer zur ihrer Längsausdehnung orientiert. Die Blocksauger sind über die sie tragenden Spannbrücken mit dem Maschinenbett zumindest pneumatisch verbunden. Im Maschinenbett befinden sich Unterdruckkammern. Der Unterdruck erstreckt sich bis in die Blocksauger.

Zum Einrichten der Holzbearbeitungsmaschine werden nach dem Positionieren der Spannbrücken auf dem Werkstückspanntisch des Maschinenbetts die Blocksauger manuell nach Typ ausgesucht und auf die Spannbrücken aufgesetzt. Dazu wird jeder einzelne Blocksauger vom Einrichter auf eine vorgewählte Spannbrücke aufgesetzt. Der Aufsetzort auf der Spannbrücke wird dem Einrichter durch eine optische Markierung vorgegeben. Die Markierung stellt eine leuchtende Lichtquelle, z.B. eine LED, dar. Letztere ist Teil einer Reihe von einer Vielzahl von LED's, die entlang jeder Spannbrücke, beispielsweise im Abstand von einigen Millimetern, angeordnet sind. Der Einrichter setzt den Blocksauger so auf die Spannbrücke, dass eine blocksaugerseitige Markierung vor oder über der leuchtenden LED positioniert ist.

Der vorliegenden Erfindung liegt die Problemstellung zugrunde, eine Werkzeugmaschine zu entwickeln, bei der der Typ bzw. die Bauart, die Position und der Betriebszustand eines jeden Blocksaugers werkzeugmaschinenseitig erfassbar ist.

Diese Problemstellung wird mit den Merkmalen des Patentanspruchs 1 gelöst. Dazu weist die einzelne Spannbrücke entlang ihrer nutzbaren Länge, neben dem aus einzelnen Sendelichtquellen bestehenden Lichtband, eine Empfängerschiene mit nachgeordnetem Lichtempfänger auf. Der Lichtempfänger hat eine Auswerteeinheit oder dem Lichtempfänger ist eine Auswerteeinheit nachgeschaltet, die die empfangenen Signale in eine - von der Werkzeugmaschine lesbare - Nutzsignalfolge umwandelt. Der einzelne Blocksauger weist mindestens eine Energiequelle, mindestens einen werkstückseitigen Drucksensor und/oder mindestens einen spannbrückenseitigen Drucksensor, mindestens einen Identifizierungsbaustein und mindestens eine Recheneinheit zur Realisierung einer seriellen oder parallelen Signalübertragung für die Anzeige des Betriebszustands mittels optischer oder akustischer Hilfsmittel und/oder für die Kommunikation mit der Werkzeugmaschine auf. Der einzelne Blocksauger und die Holzbearbeitungsmaschine weist jeweils mindestens einen Sender und mindestens einen Empfänger für die Informationsübertragung mittels optischer Signale und/oder mittels Funksignale auf. Der Blocksauger weist ferner mindestens einen optischen Signalempfänger auf, für den - bei einem auf der Spannbrücke aufgesetzten Blocksauger - die optisch markierte Position erkennbar ist. Der Blocksauger weist zudem mindestens eine Sendelichtquelle auf, deren blocksaugerseitiger Lichtaustritt - zur Einkopplung der ausgesandten Lichtsignale - in kurzem Abstand zur Empfängerschiene angeordnet ist.

Die Spannbrücken der Holzbearbeitungsmaschine haben entlang ihrer Längsausdehnung seitliche angeordnete durchgehende Lichtbänder, die jeweils aus einer Vielzahl kleiner Lichtquellen zusammengesetzt sind. Um einen bestimmten Blocksauger auf einer Spannbrücke manuell zu positionieren, werden im Lichtband wenige Lichtquellen bestromt, deren Helligkeit von mindestens einem optischen Empfänger des Blocksaugers zum Überprüfen seiner korrekten Positionierung erkannt und bewertet wird. Liegt die erfasste Helligkeit im erwarteten Sollbereich, wird die erfolgreiche Positionierung an die Holzbearbeitungsmaschine zurückgemeldet. Die Rückmeldung wird mit zwei verschiedenen Methoden verwirklicht. Zum einen befinden sich in den Spannbrücken parallel zu den Lichtbändern lange Lichtleiter, die gegenüber dem Umgebungslicht abgeschattet sind. In den Lichtleiter der den jeweiligen Blocksauger tragenden Spannbrücke koppelt der Blocksauger optisch ein - die korrekte Positionierung bestätigendes - Signal ein. Das Signal wird am räumlichen Ende der betroffenen Spannbrücke ausgekoppelt und in ein elektrisches Signal gewandelt. Letzteres wird z.B. drahtgestützt über das Maschinenbett der Steuerung der Holzbearbeitungsmaschine zugeführt.

Zum anderen kann der Blocksauger über einen integrierten Funksender den Wert der Helligkeit direkt an einen Funkempfänger der Holzbearbeitungsmaschine senden.

Neben der Rückmeldung einer korrekten oder einer zu korrigierenden Blocksaugerendlage an die Holzbearbeitungsmaschine, sendet der jeweilige Blocksauger, z.B. regelmäßig in bestimmten Zeitspannen, seine aktuellen Zustandsdaten an die Holzbearbeitungsmaschine, um dessen Funktionssicherheit laufend überwachen und dokumentieren zu können.

Zur Signalübertragung durch die Umgebungsluft werden elektromagnetische Wellen benutzt. Für die Übertragung sog. "optischer Signale" liegen die Wellenlängen im Bereich von 3 nm bis 3 x 10⁻⁵ m. Bei der Übertragung mittels "Funksignalen" liegen die Wellenlängen im Bereich von 3 cm bis 3 km.

Weitere Einzelheiten der Erfindung ergeben sich aus den Unteransprüchen. Es folgt eine Beschreibung eines schematisch dargestellten Ausführungsbeispiels.
- Figur 1:: perspektivische Ansicht eines Werkstückspanntisches einer Werkzeugmaschine;
- Figur 2:: perspektivische Ansicht einer Spannbrücke;
- Figur 3:: Spannbrückenende mit Führungselement;
- Figur 4:: Lichtleiter und Lichtleiterträger zu Figur 3;
- Figur 5:: Schnitt durch einen Blocksauger und eine Spannbrücke;
- Figur 6:: Blocksaugerschnitt mit Falschluftventil.

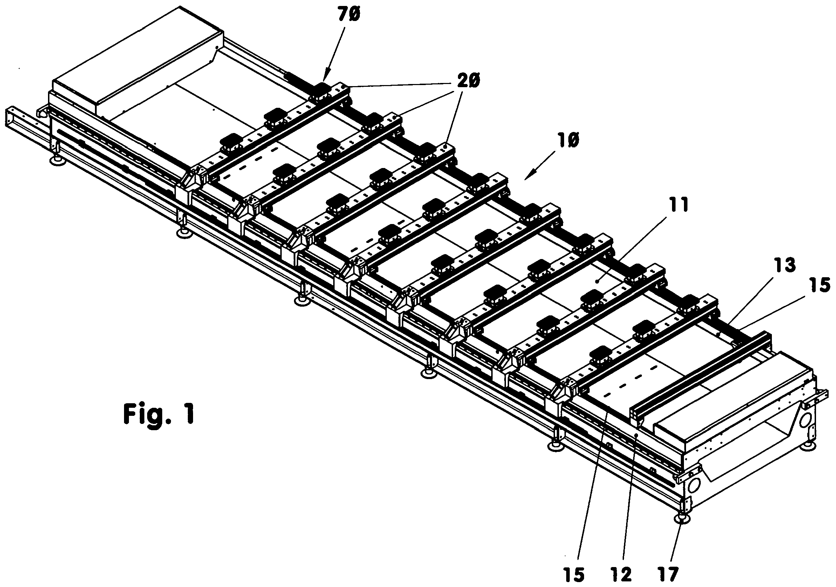

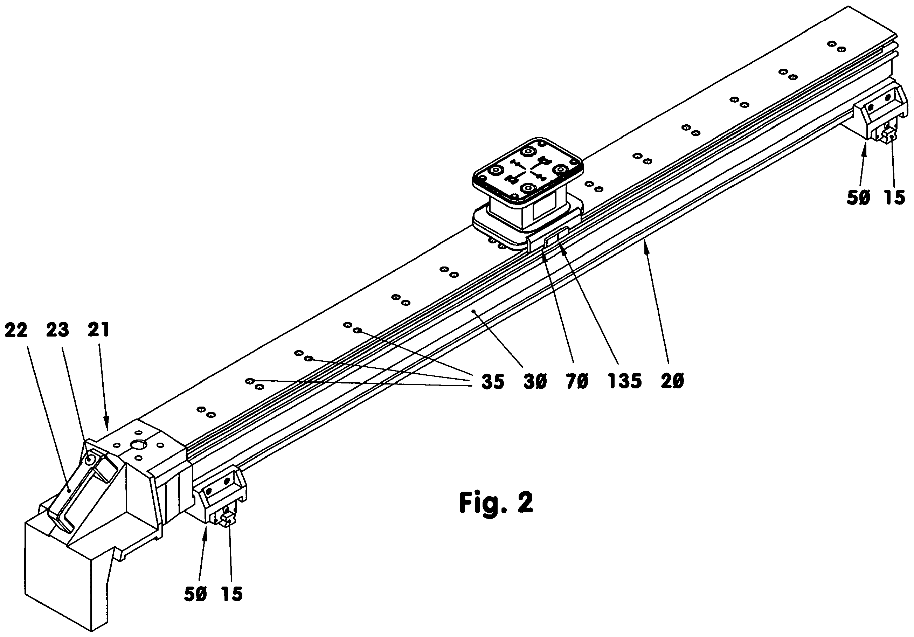

Die Figur 1 zeigt den Werkstückspanntisch (11) bzw. das Maschinenbett einer Holzbearbeitungsmaschine (10). Der Werkstückspanntisch (11) ist ein langgestrecktes bett- oder kanalartiges Gestell, das über Füße (17) auf dem Boden der Produktionsstätte aufgestellt ist. Das Gestell hat vorn und hinten z.B. aufrecht stehende Wände. Auf den beiden Oberkanten dieser Wände (12, 13) befinden sich Schienen (15). Auf diesen beiden Schienen (15) sind im Ausführungsbeispiel z.B. acht Spannbrücken (20) bzw. Konsolen gelagert, vgl. auch Figur 2, die in Längsrichtung des Maschinenbetts z.B. manuell verfahrbar sind. Nur beispielhaft sitzen auf jeder Spannbrücke (20) drei baugleiche Blocksauger (70).

Die Spannbrücke (20), vgl. Figur 2, besteht aus einem Kopfelement (21), einem Träger (30) und den Führungseinrichtungen (50).

Der Träger (30) ist ein aus einer Aluminiumlegierung gefertigtes Strangprofil, das mehrere im Querschnitt geschlossene Hohlkammern (32) aufweist, von denen zumindest zwei (33, 34) als Unterdruckkammern dienen. In der Oberseite (31) des Trägers (30) sind eine Vielzahl von Bohrungen (35) angeordnet, die - quer zur Längsrichtung des Trägers (30) - paarweise aufgereiht sind. In jeder der vertikal zur Oberseite angeordneten Bohrung (35) sitzt ein Saugventil, z.B. unterhalb eines Abdecksiebes. Jedes Saugventil hat mindestens einen ferromagnetischen Ventilkörper. Die Bohrungen (35) münden in die jeweiligen Unterdruckkammern (33, 34).

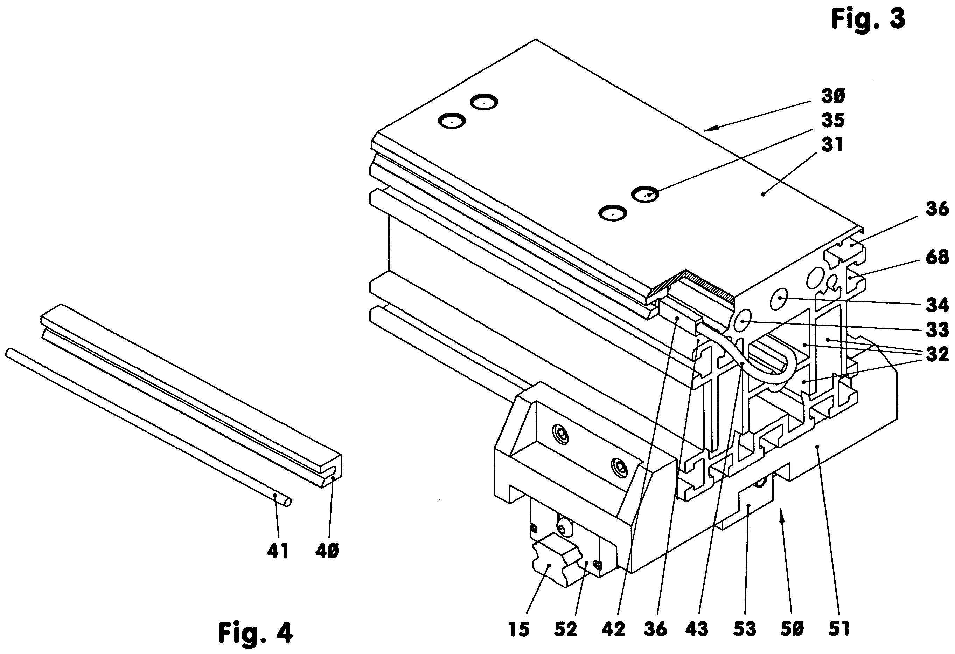

Nach Figur 3 hat der Träger (30) zumindest auf einer Seite eine kanalartige, seitlich offene Aussparung (36), die nur wenige Millimeter unter der Oberseite (31) des Trägers (30) angeordnet ist. In der Aussparung (36) sitzt ein Lichtleiterträger (40). Der beispielsweise aus Kunststoff gefertigte Lichtleiterträger (40) hat z.B. einen u-förmig gestalteten, zur Seite hin offenen Querschnitt, vgl. Figur 4. Im Zentrum des Lichtleiterträgers (40) sitzt eingeklemmt ein z.B. zylinderstabförmiger Lichtleiter (41), der ggf. aus dem Kunststoff PMMA hergestellt ist. Er erstreckt sich - wie auch der Lichtleiterträger (40) - nahezu über die gesamte Länge des Trägers (30).

Z.B. am hinteren Ende des Lichtleiters (41) ist ein lichtempfindlicher Sensor (42) angeordnet. In Figur 3 hat er ein quaderförmiges Gehäuse. Das Kabel (43) des Sensors (42) wird über eine der größeren Hohlkammern (32) zum Kopfelement (21) geführt.

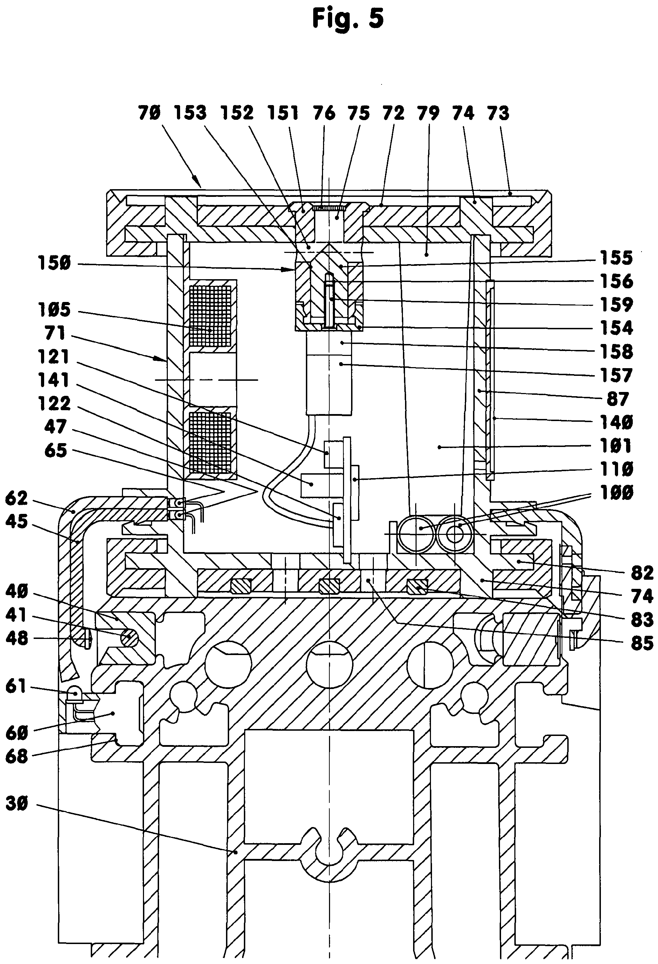

Nach Figur 5 befindet sich unterhalb des Lichtleiters (41) in einer weiteren seitlichen Aussparung (68) des Trägers (30) ein Lichtband (60). Das Lichtband ist ein entlang dem Träger (30) verlegter Stab, in dem z.B. im Abstand von jeweils fünf Millimetern Leuchtdioden (61) angeordnet sind. Alle Leuchtdioden (61) liegen in einer Linie hintereinander aufgereiht. Jede Leuchtdiode (61) ist dabei separat ansteuerbar.

Die Unterseite des Trägers (30) weist in den beiden Trägerendbereichen je eine Führungseinrichtung (50) auf, vgl. Figuren 2 und 3. Jede Führungseinrichtung (50) besteht aus einem Gestell (51) und zwei daran angeordneten Führungswagen (52) sowie einer pneumatischen Klemmung (53). Das Gestell (51) umgreift, z.B. von unten her, beidseitig den Träger (30), mit dem es z.B. über Nutsteine und Schrauben starr verbunden ist. Beispielsweise an der Unterseite des Gestells (51) sitzen die zwei Führungswagen (52), die jeweils dieselbe Schiene (15) umgreifen. Zwischen den Führungswagen (52) ist die pneumatisch belüftbare Klemmung (53) angeordnet.

An der vorderen Stirnseite des Trägers (30) ist das Kopfelement (21) angeschraubt, vgl. Figur 2. Am Kopfelement (21) ist ein Handgriff (22) angeordnet, über den die einzelne Spannbrücke (20), nach dem Lösen der Spannbrückenklemmungen (53), seitlich manuell verfahren werden kann. Zum Lösen der Klemmungen (53) wird der im oberen Bereich des Handgriffs (22) angeordnete Druckknopf (23) betätigt und gehalten. Am Kopfelement (21) ist, z.B. zur Unterdruckversorgung der Unterdruckkammern (33, 34), ein mit einer Unterdruckleitung des Maschinentisches verbundener Unterdruckschlauch befestigt. Ferner werden im Kopfelement (21) die Signalleitungen des Lichtbands (60) und des lichtempfindlichen Sensors (42) zusammengeführt, um sie von dort aus über z.B. andere Kabel oder über Kontaktschienen an die Elektronik des Maschinentisches (11) weiterzugeben.

Auf den einzelnen Spannbrücken (20) können, je nach Bearbeitungsauftrag und Spannbrückenlänge, z.B. 5 bis 10 Blocksauger (70) aufgesetzt werden. Der Blocksauger (70) ist mechanisch ein zwischen dem Werkstück und der Spannbrücke angeordneter, z.B. innenversteifter, zumindest seitlich gasdichter Hohlkörper. Er ist z.B. ein mehrere Zentimeter hoher quaderförmiger Grundkörper (71), mit zwei großen, einander gegenüberliegenden Stirnflächen (72, 82) und einem diese verbindende, z.B. vierkantrohrförmigen Zwischenelement (87).

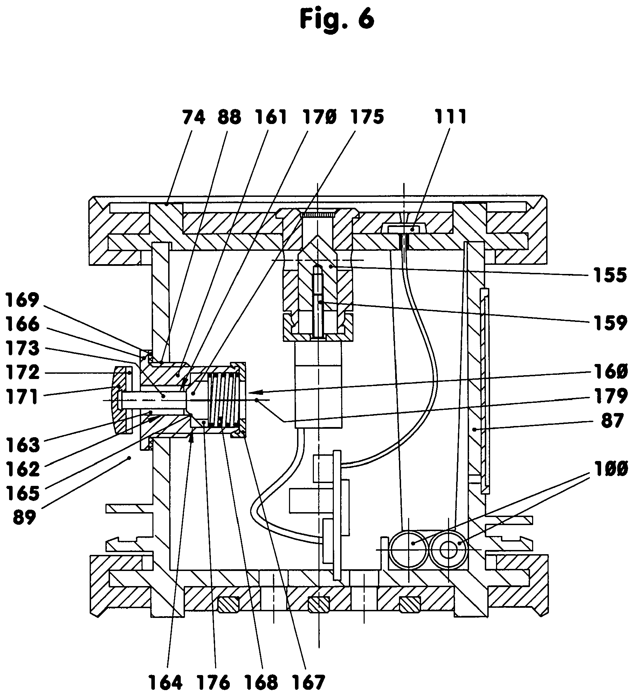

Die Stirnflächen (72, 82) tragen nach den Figuren 5 und 6 umlaufende elastische Ein- oder Mehrlippendichtungen (73) und erhabene Auflagestellen (74). Mit der unteren Stirnfläche (82) liegt der Blocksauger (70) auf der Spannbrücke (20) auf, während auf seiner oberen Stirnfläche (72) das Werkstück auflegbar ist. Beide Stirnflächen (72, 82) weisen jeweils in der von den Mehrlippendichtungen (73) umgebenen Fläche mindestens eine Saugbohrung (75) auf.

In der unteren Stirnfläche (82) sind magnetische Streifen (83) und Absaugbohrungen (85) integriert. Mittels der Magnetkraft dieser Streifen (83) werden die unter dem Blocksauger (70) gelegenen Ansaugventile der Spannbrücken (20) geöffnet. Die Bohrungen (75) und (85) kommunizieren pneumatisch miteinander über das hohle Zwischenelement (87).

Sitzt der Blocksauger (70) auf seiner Spannbrücke (20) und liegt zudem ein Werkstück auf dem Blocksauger (70), pflanzt sich der Unterdruck der Spannbrücke (20) in den Blocksauger (70) fort, wodurch das Werkstück auf dem Blocksauger (70) festgesaugt wird. Wirken auf das Werkstück während dessen Bearbeitung z.B. Zerspankräfte, reichen diese nicht aus, um das Werkstück von dem Verband aus mehreren oder vielen Blocksaugern (70) zu lösen. In der Regel kommen immer mehrere Blocksauger (70) bei einem Werkstück zeitgleich zum Einsatz.

Um die Positionierung und den Einsatz des Blocksaugers (70) dauerhaft überwachen zu können, wird der Blocksauger (70) mit diversen Sensoren (42, 65, 110), mit Kommunikationsmitteln (140) und mit mindestens einer diese ansteuernden Elektronik (121, 122, 141) ausgestattet.

Beispielsweise verfügt der einzelne Blocksauger (70) über eine eigene Energiequelle (100), über einen werkstückseitigen Drucksensor (110), ggf. auch über einen spannbrückenseitigen Drucksensor, und über mindestens einen Identifizierungsbaustein (121). Ferner ist im Blocksauger (70) mindestens ein optischer Signalempfänger (65) und mindestens eine Sendelichtquelle (47) eingebaut. Zudem weist er mindestens eine Recheneinheit (122) auf, die u.a. zur Realisierung einer seriellen oder parallelen Signalübertragung für die Anzeige des Betriebszustands mittels optischer und/oder akustischer Hilfsmittel und/oder der Kommunikation mit der Bearbeitungsmaschine (10) dient.

Die Energiequelle (100) ist beispielsweise mindestens eine Batterie. Alternativ kann auch ein Akkumulator, der z.B. aus zwei Zellen besteht, vgl. Figur 5, verwendet werden, der z.B. im Blocksaugermagazin über Kontakte direkt oder über eine Leiterschleife indirekt mittels auf eine blocksaugerseitige Ladespule (105) wirkende Induktion aufgeladen wird. Im Blocksaugermagazin lagern die auf den Spannbrücken (20) nicht benötigten Blocksauger (70). Die direkte Ladung des Akkumulators im Blocksaugermagazin kann über eine zweipolige Stromschiene erfolgen, die z.B. an einen Netztransformator angeschlossen ist. Der einzelne Blocksauger (70) liegt im Magazin mit seinen Kontakten auf der Stromschiene auf.

Die Sendelichtquelle (47) ist z.B. eine LED oder ein Niederwatt-Laser.

Beim Einrichten der Werkzeugmaschine (10) hat der Maschinenbediener die Blocksauger (70) entsprechend einem zum Werkstück passenden Plan auf die werkstückgerecht positionierten Spannbrücken (20) zu setzen. Sobald er den vorgewählten Blocksauger (70) auf seinen - mittels mindestens einer LED (61) des Lichtbands (60) angezeigten - vorgesehenen Platz (135) in der richtigen Ausrichtung auf der Spannbrücke (20) abgesetzt hat, meldet sich die Blocksaugerelektronik bei der Maschinensteuerung entweder per Funk, per Lichtleiter und/oder drahtgestützt.

Zur lichtleiter- und/oder drahtgestützten Übertragung werden die zu transportierenden Daten von der Auswerteeinheit codiert und gemäß Figur 5, z.B. mittels IR-Signale, über eine Sendediode (47), einen abgewinkelten Lichtleiter (45) und einen Lichtaustritt (48) in den stabförmigen, vor Streulicht geschützt gelegenen Lichtleiter (41) eingekuppelt. An mindestens einem Ende des Lichtleiters (41) werden die ankommenden Lichtsignale an einen Sensor (42) übergeben, vgl. Figur 3. Beispielsweise dort werden die Lichtsignale in elektrische Signale umgewandelt und per Kabel an die Maschinensteuerung weitergeleitet.

Der Blocksauger übermittelt folgende Informationen:
Erstens identifiziert er sich, indem er seine Codenummer übergibt. Zweitens meldet er seine Ausrichtung gegenüber der Spannbrücke und informiert über einen Lichtstärkekennwert seine Lage gegenüber der ihm die Position vorgegebenen LED der Spannbrücke (70). Sind von der Maschinensteuerung diese Informationen als richtig und/oder tolerierbar bewertet worden, wird nach dem Aufsetzen und entsprechenden Prüfen der übrigen Blocksauger (70) die Druckluft in den Spannbrücken (20) zugeschaltet.

Um die Dichtigkeit zwischen der jeweiligen Spannbrücke (20) und dem aufsitzenden Blocksauger (70) - ohne aufliegendes Werkstück - zu prüfen, veranlasst die Maschinensteuerung das Schließen des Ventils (150), vgl. Figur 5. Dazu lässt die Maschinensteuerung die LED's (61) des Lichtbandes (60) in einem bestimmten Rhythmus blinken. Die Blinkfolge wird über den abgewinkelten Lichtleiter (62) und die Empfängerdiode (65) an die Recheneinheit bzw. Auswerteelektronik (122) übertragen. Letztere initiiert die Bestromung des Ventilmotors (157) des Ventils (150). Das Ventilgehäuse (151) des Ventils (150) sitzt dicht, z.B. eingeklebt, in der durch die Dichtung (73) abgedeckten oberen Stirnplatte (72). Im oberen Bereich des Ventilgehäuses (151) befindet sich zentral die Saugbohrung (75), die unterhalb der Stirnplatte (72) in eine querliegende Verteilbohrung (152) mündet. Die Verteilbohrung (152) kreuzt eine Ventilsitzbohrung (153), in der der Ventilkörper (155) geführt ist. Im unteren Bereich des Ventilgehäuses (151) ist die Ventilsitzbohrung (153) durch einen den Getriebemotor (157, 158) tragenden Einrastdeckel (154) abgedeckt. Das Getriebe (158) hat als Getriebeausgang eine Gewindespindel (159), die in eine zentrale Gewindebohrung (156) des Ventilkörpers (155) hineinragt.

Bei einem Bestromen des Motors (157) schraubt die Gewindespindel (159) den Ventilkörper (155) des Ventils (150) in seine Sperrposition, vgl. Figur 6. Der Elektromotor (157) sowie alle elektronischen Bauteile des Blocksaugers (70) werden dabei durch die blocksaugereigenen Akkumulatoren (100) gespeist.

Durch das Schließen des Ventils (150) wird der Innenraum (79) des Grundkörpers (71) gegenüber der oberen Stirnfläche (72) des Blocksaugers (70) verschlossen. Nun misst der Drucksensor (110) den Innendruck des Blocksaugers (70). Akzeptiert die Maschinensteuerung alle gesammelten Innendruckwerte, kann das Werkstück auf die Blocksauger aufgelegt werden. Mit dem entsprechenden Freigabesignal wird das Öffnen aller Ventile (150) veranlasst.

Wird z.B. beim Auflegen des Werkstücks bemerkt, dass ein Blocksauger (70) nicht optimal auf dem Werkstückspanntisch (11) angeordnet ist, besteht der Wunsch, diesen speziellen Bocksauger (70) - ggf. mit oder ohne einem geringfügigen Anheben des Werkstücks - zu verrücken, ohne alle anderen Blocksauger durch Abschalten des Tischvakuums zu lösen. Um das zu ermöglichen, wird im Blocksauger (70) ein handbetätigbares Falschluftventil (160) integriert, vgl. Figur 6. Durch ein Betätigen eines solchen Falschluftventils (160) wird der Unterdruck in diesem Blocksauger (70) abgebaut, so dass er auf der Spannbrücke (20) verschoben oder abgenommen werden kann.

Das Falschluftventil (160) besteht z.B. aus einem rotationssymmetrischen Gehäuse (161), das in eine Gewindebohrung (88) der Wandung des Zwischenelements (87) eingeschraubt ist. Das Ventil (160) sitzt an einer ergonomisch gut erreichbaren Stelle, z.B. - entgegen der Darstellung in Figur 6 - neben dem Display (140). Im Gehäuse (161) ist ein Schließglied (170) geführt, das aus einem Betätigungselement (171), einem Schaft (173) und einem Ventilkörper (175) besteht.

Das Gehäuse (161) sitzt außen mittels eines zwischen dem gehäuseseitigen Flanschkragen (166) und der Wandung angeordneten Dichtrings (169) dicht im Zwischenelement (87). Innen ist es in einen Schließgliedführungsbereich (162) und einen Schließgliedsitzbereich (164) aufgeteilt. Im Schließgliedführungsbereich (162) weist die Gehäusebohrung mehrere Gehäusenuten (163) auf, die z.B. parallel zur Ventilmittellinie (179) orientiert sind. Auf den die Gehäusenuten (163) in Umfangsrichtung begrenzenden Stegen ist das Schließglied (170) über seinen Schaft (173) geführt. An den Schließgliedführungsbereich (162) schließt sich über den Ventilsitz (165) der Schließgliedsitzbereich (164) an. Im Schließgliedsitzbereich (164) wird der Ventilkörper (175) über die Schließfeder (168) gegen den Ventilsitz (165) gepresst. Die Schließfeder (168) stützt sich an einem am Gehäuse (161) verrasteten Deckel (167) ab.

Der Ventilkörper (175) weist außerhalb seiner, hier z.B. kegelstumpfmantelförmigen, Dichtfläche viele radiale Ventilkörpernuten (176) auf. Die Nuten (176) werden in Umfangsrichtung durch Stege begrenzt, an denen die Schließfeder (168) anliegt. Am Ventilkörper (175) ist der zylindrische Schaft (173) angeformt, der an seinem über die Wandung des Zwischenelements (87) überstehenden Ende eine z.B. umlaufende Rastnase aufweist. Über dieses freie Ende des Schafts (173) ist ein Betätigungselement (171) eingerastet übergestülpt. Das Betätigungselement (171) hat an seiner Unterseite radiale Rippen (172), zwischen denen hindurch - beim Betätigen des Falschluftventils - die Umgebungsluft in Richtung Vakuum am Ventilsitz (165) vorbei ins Blocksaugerinnere strömt.

Anstelle oder zusätzlich zu dem handbetätigbaren Falschluftventil (160) kann im Blocksauger (70) auch ein elektrisch betätigbares Ventil angeordnet sein.

Bevor das Bearbeiten des Werkstücks, z.B. durch Herstellen von Bohrbildern, Ausfräsen von Ausnehmungen, Sägen oder Fräsen der Außenkontur, beginnt, wird auch die Dichtigkeit der Dichtungen (73) gegenüber dem Werkstück geprüft. Dazu werden wiederum die Drucksensoren (110) aller Blocksauger (70) von der Maschinensteuerung abgefragt. Liegen die Druckwerte im Toleranzbereich, wird die Bearbeitung gestartet.

Während der Bearbeitung des Werkstückes frägt die Auswerteelektronik jedes einzelnen Blocksaugers, z.B. alle hundert Millisekunden, den Blocksaugerinnendruck ab. Fällt beispielsweise durch ein Beschädigen des Blocksaugers (70) - z.B. beim Hineinsägen - der Innendruck unter einen vorgegebenen Grenzwert, löst dieser Blocksauger über Funk und/oder lichtleiter- und drahtgestützt einen Alarm und ein Notaus-Abschalten der Bearbeitungsmaschine (10) aus.

Zusätzlich verfügt jeder Blocksauger über ein Display, das ggf. zu jeder Zeit, per Knopfdruck oder ausgelöst durch bzw. über die Maschinensteuerung, über den momentanen Gebrauchszustand des Blocksaugers Auskunft gibt. Als Display wird beispielsweise ein E-Paper verwendet. Bei einem nicht permanent aktualisierten Display wird bei jedem erkannten Auftreten einer Unregelmäßigkeit das Display zum einen sofort aktualisiert und zugleich der Wert oder die Information, die die Unregelmäßigkeit belegt, z.B. durch Blinken, durch Fettdruck, ggf. unterstützt durch ein akustisches Signal, dargestellt. Zu den Unregelmäßigkeiten zählen u.a. der zunehmende Abfall der Energie des Energiespeichers, Unterdruckschwankungen im Sauger, Störung der Signalübertragung in den Lichtleitern und den Diodenleisten oder bei Funkübertragung eine Abnahme oder eine Störung des Funk- bzw. Bluetooth-Signals.

Das Display gibt u.a. als gespeicherte blocksaugereigene Daten z.B. die Identifikationsnummer, die bisherige Betriebsdauer, den aktuellen Verschleißstatus und ggf. die noch zu erwartende Restlebenszeit oder das Datum der nächsten Wartung an. Dazu werden in der Recheneinheit und deren Speicher alle Saugzyklen und deren jeweiligen Unterdruckwerte erfasst und ausgewertet. Auf diese Weise wird in einem verschleißenden Sauger die Abnahme des Unterdrucks von Bearbeitungszyklus zu Bearbeitungszyklus über der Zeit registriert und daraus eine Leckage-Selbstdiagnose abgeleitet. Auch werden die Lade- und Entladezyklen des saugereigenen Energiespeichers (100) erfasst, um so frühzeitig einen Energiespeicheraustausch einzufordern.

Zusätzlich verfügt jeder Blocksauger (70) über eine Aufweckfunktion. Sie wird realisiert mit einem 3D-Beschleunigungssensor, bei dem die reguläre Schwerkraftwirkung als Signalauslöser eliminiert ist. Mit dem Herausnehmen des Blocksaugers (70) aus dem Magazin wird die Aufweckfunktion aktiviert. Nach dem Absetzen des Blocksaugers (70) auf die ausgewählte Spannbrücke (20) bleibt die Elektronik solange aktiviert, wie innerhalb einer Zeitspanne von 2 bis 20 Minuten, vorzugsweise beträgt die Länge der Zeitspanne 10 Minuten, mindestens ein saugertypisches Signal, wie z.B. ein Diodenlichtwechsel oder eine Druckänderung, erfasst wird. Jedes saugertypische Signal startet die Zeitspanne neu.

Sollen innerhalb der Holzbearbeitungsmaschine die Maschinenteile wie Maschinenbett (11), Spannbrücken (20) und Blocksauger (70) über Funk vorrangig miteinander kommunizieren, so kann hier die sog. Enocean® -Funktechnologie verwendet werden. Bei dieser Funktechnologie werden zum Senden nur relativ kurze Funksignale benutzt, so dass für deren Versenden nur geringste Energiemengen benötigt werden. Das Funkprotokoll ist so angelegt, dass die Informationen energiearm mit hoher Zuverlässigkeit übertragen werden.

Die Komponenten der Enocean®-Funktechnologie arbeiten bidirektional. Sie bieten also Sende- und Empfangsmöglichkeiten. Durch ein Verschlüsseln der Funkdaten und des Rollingcodes wird verhindert, dass auf die übertragenen Datenpakete von außen unbemerkt zugegriffen werden kann. Die Sender und Empfänger des Maschinenbetts (11) sind, z.B. drahtgestützt, mit der Maschinen-SPS verbunden.

Als Energielieferant werden u.a. die Piezoelektrizität von Schaltern, die Bewegungsenergie elektrodynamischer Energiewandler, die Energie von Solarzellen oder ein auf dem Seebeck-Effekt basierender elektrothermischer Wandler (Peltier-Elemente) eingesetzt. Im vorliegenden Fall kann der Hub der Ventilglieder der Vakuumventile jeweils in elektrodynamischen Wandlern zum Laden der Akkumulatoren (100) genutzt werden. Zusätzlich oder alternativ können an den Stellen expandierender Luft Peltierelemente für die Stromgewinnung genutzt werden.

Hier übermitteln die Blocksauger (70) prompt im Störfall oder regelmäßig im Normalfall ihre Kenndaten den spannbrückenseitigen Empfängern, damit deren Sender die Daten an die maschinenbettseitigen Empfänger weiterreichen.

### Bezugszeichenliste:

- 10: Holzbearbeitungsmaschine, Bearbeitungsmaschine
- 11: Werkstückspanntisch, Maschinenbett, Gestell
- 12, 13: Wände
- 15: Schienen
- 17: Füße

- 20: Spannbrücke, Fixierbalken
- 21: Kopfelement
- 22: Handgriff
- 23: Druckknopf

- 30: Träger
- 31: Oberseite
- 32: Hohlkammern
- 33, 34: Unterdruckkammern

- 35: Bohrungen für Saugventile
- 36: Aussparung, offen

- 40: Lichtleiterträger
- 41: Empfängerschiene, Lichtleiter, Stab
- 42: Lichtempfänger, Sensor, lichtempfindlich
- 43: Kabel

- 45: Lichtleiter, abgewinkelt, innen

- 47: Sendelichtquelle, LED, Sendeleuchtdiode
- 48: Lichtaustritt
- 50: Führungseinrichtung
- 51: Gestell
- 52: Führungswagen
- 53: Klemmung, Spannbrückenklemmung

- 60: Lichtband
- 61: Sendelichtquelle, einzeln
- 62: Lichtleiter, abgewinkelt, außen

- 65: Signalempfänger
- 68: Aussparung, offen für (60)

- 70: Blocksauger
- 71: Grundkörper
- 72: Stirnplatte, Stirnfläche, oben
- 73: Dichtungen, Mehrlippendichtungen
- 74: Auflagestellen
- 75: Saugbohrungen
- 76: Sieb
- 79: Innenraum, Unterdruckraum

- 82: Stirnplatte, Stirnfläche, unten
- 83: Streifen, magnetisch
- 85: Absaugbohrungen

- 87: Zwischenelement, vierkantrohrförmig
- 88: Gewindebohrung für (160)
- 89: Blocksaugerumgebung; Luftraum um den Blocksauger

- 100: Energiequelle, z.B. zwei Akkumulatoren
- 101: Niederhalter
- 105: Ladespule
- 110: Drucksensor, werkstückseitig
- 111: Drucksensor, spannbrückenseitig

- 121: Identifizierungsbaustein
- 122: Recheneinheit, Auswerteelektronik

- 135: Blocksaugerposition

- 140: Display, E-Paper
- 141: Display-Ansteuerung

- 150: Ventil, elektromotorisch, elektrisch betätigt
- 151: Ventilgehäuse
- 152: Verteilbohrung
- 153: Ventilsitzbohrung
- 154: Einrastdeckel
- 155: Ventilkörper
- 156: Gewindebohrung, Gewindeeinsatz
- 157: Elektromotor, Ventilmotor
- 158: Getriebe
- 159: Gewindespindel

- 160: Falschluftventil
- 161: Gehäuse
- 162: Schließgliedführungsbereich
- 163: Gehäusenuten
- 164: Schließgliedsitzbereich
- 165: Ventilsitz
- 166: Flanschkragen
- 167: Deckel
- 168: Schließfeder
- 169: Dichtring
- 170: Schließglied, Ventilglied
- 171: Betätigungselement
- 172: Rippen
- 173: Schaft
- 175: Ventilkörper
- 176: Ventilkörpernuten
- 179: Ventilmittellinie

## Patentansprüche

1. Werkstückspanntisch einer Holzbearbeitungsmaschine (10) mit auf Spannbrücken (20) angeordneten Blocksaugern (70) zum kraftschlüssigen Spannen von Werkstücken mittels Unterdruck, wobei der einzelne Blocksauger (70) zum Einrichten des Werkstückspanntisches (11) manuell auf eine Spannbrücke (20) - an einer durch mindestens eine leuchtende Sendelichtquelle (61) eines Lichtbandes (60) optisch markierten Position - aufsetzbar ist, **dadurch gekennzeichnet,**
- **dass** die einzelne Spannbrücke (20) entlang ihrer nutzbaren Länge, neben dem aus einzelnen Sendelichtquellen (61) bestehenden Lichtband (60), eine Empfängerschiene (41) mit nachgeordnetem Lichtempfänger (42) aufweist,
- **dass** der Lichtempfänger (42) über eine Auswerteeinheit verfügt oder dem Lichtempfänger (42) eine Auswerteeinheit nachgeschaltet ist, die die empfangenen Signale in eine - von der Holzbearbeitungsmaschine lesbare - Nutzsignalfolge umwandelt,
- **dass** der einzelne Blocksauger (70) mindestens eine Energiequelle (100), mindestens einen werkstückseitigen Drucksensor (110) und/oder mindestens einen spannbrückenseitigen Drucksensor (111), mindestens einen Identifizierungsbaustein (121) und mindestens eine Recheneinheit (122) zur Realisierung einer seriellen oder parallelen Signalübertragung für die Anzeige des Betriebszustands mittels optischer oder akustischer Hilfsmittel und/oder für die Kommunikation mit der Werkzeugmaschine (10) aufweist,
- **dass** der einzelne Blocksauger (70) und die Holzbearbeitungsmaschine (10) jeweils mindestens einen Sender und mindestens einen Empfänger für die Informationsübertragung mittels optischer Signale und/oder mittels Funksignale aufweist,
- **dass** der Blocksauger (70) mindestens einen optischen Signalempfänger (65) hat, für den - bei einem auf der Spannbrücke (20) aufgesetzten Blocksauger (70) - die optisch markierte Position (135) erkennbar ist,
- **dass** der Blocksauger (70) mindestens eine Sendelichtquelle (47) aufweist, deren blocksaugerseitiger Lichtaustritt (48) - zur Einkopplung der ausgesandten Lichtsignale - in kurzem Abstand zur Empfängerschiene (41) angeordnet ist.

2. Werkstückspanntisch gemäß Anspruch 1, **dadurch gekennzeichnet, dass** die Empfängerschiene (41) der Spannbrücke (20) ein Lichtleiterelement ist, das sich entlang der Spannbrücke (20) erstreckt und an mindestens einer seiner Stirnseiten vor einem Lichtempfänger (42) endet.

3. Werkstückspanntisch gemäß Anspruch 2, **dadurch gekennzeichnet, dass** der Lichtempfänger (42) der Spannbrücke (20) eine Fotodiode ist.

4. Werkstückspanntisch gemäß Anspruch 1, **dadurch gekennzeichnet, dass** die Energiequelle des Blocksaugers (70) ein induktiv ladbarer Akkumulator (100) ist.

5. Werkstückspanntisch gemäß Anspruch 1, **dadurch gekennzeichnet, dass** in der dem Werkstück zugewandten Stirnfläche (72) des Blocksaugers (70) ein elektrisch betätigbares Ventil (150) angeordnet ist, das den Raum vor der Stirnfläche (72) mit dem Innenraum (79) des Blocksaugers (70) verschließbar trennt.

6. Werkstückspanntisch gemäß Anspruch 1, **dadurch gekennzeichnet, dass** am Blocksauger (70) ein Ventil (160) angeordnet ist, das den Innenraum (79) des Blocksaugers (70) manuell öffenbar von der Blocksaugerumgebung (89) trennt.

7. Werkstückspanntisch gemäß Anspruch 1, **dadurch gekennzeichnet, dass** die Signalübertragung zwischen den Blocksaugern (70) und der speicherprogrammierbare Steuerung der Holzbearbeitungsmaschine (10) oder dem Maschinenbett (11) per Funk erfolgt.

8. Werkstückspanntisch gemäß Anspruch 1, **dadurch gekennzeichnet, dass** die Signalübertragung zwischen den Spannbrücken (20) und den Blocksaugern (70) per Funk erfolgt.

9. Werkstückspanntisch nach mindestens einem der vorangegangenen Ansprüche, **dadurch gekennzeichnet, dass** die Signalübertragung per Funk nach den Enocean®-Funktechnologie-Standards erfolgt.

10. Werkstückspanntisch gemäß Anspruch 9, **dadurch gekennzeichnet, dass** die Funksignale bidirektional übertragen werden.

## Claims

1. A workpiece clamping table of a woodworking machine (10) with vacuum chucks (70) arranged on clamping bridges (20) for the force-locked clamping of workpieces by means of negative pressure, wherein the individual vacuum chuck (70), in order to set up the workpiece clamping table (11), can be manually placed on a clamping bridge (20) in a position optically marked by at least one luminous emitting light source (61) of a light strip (60), **characterised in that**
- the individual clamping bridge (20) along its usable length comprises, apart from the light strip (60) comprising the individual emitting light sources (61), a receiver rail (41) with a downstream light receiver (42),
- the light receiver (42) comprises an evaluation unit or an evaluation unit is arranged downstream of the light receiver (42), which evaluation unit converts the received signals into a sequence of useful signals with can be read by the woodworking machine,
- the individual vacuum chuck (70) comprises at least one energy source (100), at least one pressure sensor (110) on the side facing the workpiece and/or at least one pressure sensor (111) on the side facing the clamping bridge, at least one identification component (121) and at least one computing unit (122) for implementing a serial or parallel signal transmission for displaying the operating state by means of optical or acoustic means and/or for communicating with the machine tool (10),
- the individual vacuum chuck (70) and the woodworking machine (10) each comprise at least one transmitter and at least one for the transmission of information by means of optical signals and/or by means of radio signals,
- the vacuum chuck (70) comprises at least one optical signal receiver (65) which can recognise the optically marked position (135) when a vacuum chuck (70) has been placed on the clamping bridge (20),
- the vacuum chuck (70) comprises at least one emitting light source (47), the light, exit (48) whereof facing the vacuum chuck side is arranged at a short distance from the receiver rail (41) for the purpose of coupling the emitted light signals.

2. The workpiece clamping table according to claim 1, **characterised in that** the receiver rail (41) of the clamping bridge (20) is a light guide element, which extends along the clamping bridge (20) and ends at at least one of its end faces before a light receiver (42) .

3. The workpiece clamping table according to claim 2, **characterised in that** the light receiver (42) of the clamping bridge (20) is a photodiode.

4. The workpiece clamping table according to claim 1, **characterised in that** the energy source of the vacuum chuck (70) is an inductively chargeable storage battery (100).

5. The workpiece clamping table according to claim 1, **characterised in that** an electrically actuated valve (150) is arranged in the end face (72) of the vacuum chuck (70) that faces the workpiece, which valve separates the space in front of the end face (72) in a closable manner with the internal space (79) of the vacuum chuck (70).

6. The workpiece clamping table according to claim 1, **characterised in that** a valve (160) is arranged on the vacuum chuck (70), which valve separates the internal space (79) of the vacuum chuck (70) in a manually openable manner from the vacuum chuck surroundings (89).

7. The workpiece clamping table according to claim 1, **characterised in that** the signal transmission between the vacuum chucks (70) and the stored program control of the woodworking machine (10) or the machine bed (11) takes place by radio.

8. The workpiece clamping table according to claim 1, **characterised in that** the signal transmission between the clamping bridges (20) and the suction chucks (70) takes place by radio.

9. The workpiece clamping table according to at least one of the preceding claims, **characterised in that** the signal transmission takes place by radio according to the Enocean® wireless technology standards.

10. The workpiece clamping table according to claim 9, **characterised in that** the radio signals are transmitted bidirectionally.

## Revendications

1. Table de serrage pour pièces à usiner d'une machine à bois (10) comportant des dispositifs d'aspiration monobloc (70) montés sur des brides de serrage (20) pour le serrage de pièces à usiner par force d'adhérence au moyen d'une dépression, chaque dispositif d'aspiration monobloc (70) pouvant être monté manuellement, pour le réglage de la table de serrage pour pièces à usiner (11), sur une bride de serrage (20) à une position optiquement marquée par au moins une source lumineuse d'émission (61) d'une bande de lumière (60),
**caractérisée en ce**
- **que** chaque bride de serrage (20) présente, le long de sa longueur utilisable, à côté de la bande de lumière (60) composée de différentes sources lumineuses (61), un rail récepteur (41) avec récepteur de lumière (42) disposé en aval
- **que** le récepteur de lumière (42) est équipé d'une unité d'évaluation ou qu'une unité d'évaluation est montée en aval du récepteur de lumière (42) qui transforme les signaux reçus en une séquence de signaux utiles lisibles par la machine à bois,
- **que** chaque dispositif d'aspiration monobloc (70) comporte au moins une source d'énergie (100), au moins un capteur de pression (110) placé du côté de la pièce à usiner et/ou au moins un capteur de pression (111) placé du côté de la bride de serrage, au moins un module d'identification (121) et au moins une unité de calcul (122) pour la réalisation d'une transmission sérielle ou parallèle destinée à l'affichage de l'état de fonctionnement à l'aide de moyens optiques ou acoustiques et/ou pour la communication avec la machine-outil (10),
- **que** chaque dispositif d'aspiration monobloc (70) et la machine à bois (10) comportent respectivement au moins un émetteur et au moins un récepteur pour la transmission des informations par signaux optiques et/ou par signaux radio,
- **que** le dispositif d'aspiration monobloc (70) est équipé au moins d'un récepteur de signaux optiques (65) pour lequel la position optiquement marquée (135) d'un dispositif d'aspiration monobloc (70) monté sur la bride de serrage (20) est identifiable,
- **que** le dispositif d'aspiration monobloc (70) présente au moins une source émettrice de lumière (47) dont la sortie de lumière (48) du côté du dispositif d'aspiration monobloc est disposée à courte distance du rail récepteur (41) pour le couplage des signaux de lumière émis.

2. Table de serrage pour pièces à usiner selon la revendication 1, **caractérisée en ce que** le rail récepteur (41) de la bride de serrage (20) est un élément conducteur de lumière qui s'étend le long de la bride de serrage (20) et qui se termine à au moins une de ses faces frontales devant un récepteur de lumière (42).

3. Table de serrage pour pièces à usiner selon la revendication 2, **caractérisée en ce que** le récepteur de lumière (42) de la bride de serrage (20) est une photodiode.

4. Table de serrage pour pièces à usiner selon la revendication 1, **caractérisée en ce que** la source d'énergie du dispositif d'aspiration monobloc (70) est un accumulateur (100) rechargeable par induction.

5. Table de serrage pour pièces à usiner selon la revendication 1, **caractérisée en ce qu'**une soupape, actionnable électriquement (150) est agencée dans la face frontale (72) du dispositif d'aspiration monobloc (70), orientée vers la pièce à usiner, qui sépare l'espace devant la face frontale (72) de manière verrouillable de l'espace intérieur (79) du dispositif d'aspiration monobloc (70).

6. Table de serrage pour pièces à usiner selon la revendication 1, **caractérisée en ce qu'**une soupape (160) est agencée sur le dispositif d'aspiration monobloc (70) qui sépare l'espace intérieur (79) du dispositif d'aspiration monobloc (70) de manière ouvrable manuellement de l'espace extérieur du dispositif d'aspiration monobloc (89).

7. Table de serrage pour pièces à usiner selon la revendication 1, **caractérisée en ce que** la transmission des signaux entre les dispositifs d'aspiration monobloc (70) et la commande par programme enregistré de la machine à bois (10) ou le banc de la machine (11) se fait par radio.

8. Table de serrage pour pièces à usiner selon la revendication 1, **caractérisée en ce que** la transmission des signaux entre les brides de serrage (20) et les dispositifs d'aspiration monobloc (70) se fait par radio.

9. Table de serrage pour pièces à usiner selon au moins une des revendications mentionnées ci-dessus, **caractérisée en ce que** la transmission des signaux par radio se fait selon les standards de la technologie radio Enocean®.

10. Table de serrage pour pièces à usiner selon la revendication 9, **caractérisée en ce que** les signaux radio sont transmis de manière bidirectionnelle.
